# EUROPÄISCHE PATENTANMELDUNG

(11) **EP 0 610 772 A2**
(43) Veröffentlichungstag der Anmeldung: **17.08.1994**
(21) Anmeldenummer: 94101435.9
(22) Anmeldetag: 01.02.1994
(51) Int. Cl.: G11B 23/087, G11B 23/50

(54) **Kassette für Aufzeichnungsträger, insbesondere Magnetband, und Gehäuse-Ergänzungsteil dafür**

(30) Priorität: 06.02.1993 DE 9301651 U
(71) Anmelder: BASF Magnetics GmbH, D-68165 Mannheim (DE)
(72) Erfinder: Schoettle, Klaus, F-67100 Strasbourg (FR); Klammer, Wolfgang, D-77799 Ortenberg (DE); Schuett, Walter, D-77694 Kehl (DE)
(74) Vertreter: Karau, Wolfgang, Dr.

(57) **Zusammenfassung**

Eine Kassette für bandförmige Aufzeichnungsträger ist in der Nähe des Bandlaufweges mit Reinigungselementen für das Band versehen, wobei am Kassettengehäuse Gehäuse-Ergänzungsteile anbringbar sind, die auf der zum Band gerichteten Seite mit wenigstens einem Reinigungselement versehen sind. Die Ergänzungsteile können als separates Frontteil unter Einbezug der Eintriffsöffnung für das Abtastorgan ausgebildet sein oder als Verschluß-Wandteile für spezielle Einsetzöffnungen im Gehäuse.

Verwendbar sind derartige separate Reinigungselemente für alle Arten von Film- oder Magnetbandkassetten.

## Beschreibung

Die Erfindung betrifft eine Kassette für einen Aufzeichnungsträger, insbesondere für ein Magnetband, mit einem Gehäuse aus Boden- und Deckelteilen und Rückwand, Vorderwand und Seitenwänden, wobei die Vorderwand eine Kopfeintrittsöffnung aufweist und an der Innenseite der Vorderwand Reinigungselemente für den Aufzeichnungsträger vorgesehen sind, sowie Gehäuse-Ergänzungsteile für diese Kassette.

Es ist eine Magnetband-Kassette mit Bandreinigungseinrichtungen bekannt, die aus zwei am Gehäuse befestigten Blattfedern mit Reinigungskissen bestehen, wobei letztere jeweils direkt an den Umlenkrollen am Band anliegen. Die Bandreinigungseinrichtung hat den Nachteil, daß die Reinigungskissen mit dem Band während des kompletten Einspulvorgangs reibend in Kontakt steht, so daß Beschädigungen des Bandes und des Reinigungskissens auftreten können. Auch wenn das Reinigungskissen nicht beschädigt wird, verliert es beim Einspulvorgang schon erheblich an Reinigungsfähigkeit.

Es ist eine weitere Magnetband-Kassette bekannt, bei der rechts und links neben der Tonkopföffnung in der Nähe der Führungszapfen relativ dicke Filzflecken an der Innenseite der Frontwand angeklebt sind. Aufgrund der Dicke der Filzflecken steht das Band ständig mit dem Filzflecken in Kontakt mit denselben oben geschilderten Nachteilen. Auch das Einführen und Ankleben der Filzflecken in die montierte Kassette bereitet Schwierigkeiten bei der Herstellung. Auch beim Ankleben bei noch offenem Gehäuse und Einlegen der Bandwickel sind Band- und Vorspannbandbeschädigungen, z.B. durch Klebmittel, nicht ausgeschlossen.

Mit der US-A-4 633 354 ist ein trennbares Rahmenteil für die Frontseite einer Kompakt-Kassette beschrieben, das am Kassettengehäuse lösbar über Klemmelemente befestigt ist. Dieses Rahmenteil enthält die genormten Kopf- und Führungselement-Öffnungen und ist von Hand entfernbar, um die Öffnung zu vergößern, wenn das Band für eine Aufzeichnung/Wiedergabe höherer Dichte aus der Kassette herausziehbar sein soll. Das Rahmenteil weist keinerlei Reinigungseinrichtungen auf.

Die vorliegende Erfindung will eine Kassette der eingangs definierten Art durch Zusatz und zweckmäßige Anbringung von Bandreinigungselementen verbessern.

Die Aufgabe wird gemäß Oberbegriff des Anspruchs 1 gelöst, wenn die Vorderwand mindestens ein separates, am Gehäuse befestigbares Ergänzungsteil aufweist, an dessen Innenseite die Reinigungselemente vorgesehen sind.

Damit wird vorteilhaft erreicht, daß die Reinigungselemente nach Montage des Kassettengehäuses und Einlegen oder Einspulen des Bandes durch Einsetzen der Ergänzungsteile hinzugefügt werden können. Dadurch bleiben die Reinigungselemente sauber und unbeschädigt und sind funktionsfähig während der Betriebszeiten der Kassetten. Es ist außerdem möglich, die Ergänzungsteile lösbar mit dem Gehäuse verbindbar auszubilden, so daß sowohl ein Austausch der kompletten Ergänzungsteile mit neuen Reinigungselementen, als auch ein Wechsel der Reinigungselemente selbst vornehmbar ist.

In zweckmäßiger Ausbildung kann das Ergänzungsteil ein die Vorderwand im Bereich der Kopfeintrittsöffnung bildendes separates Frontteil sein. Ein solches Frontteil ist vorteilhaft als getrenntes Teil, insbesondere auch mit dünnen Wandstärken, aus geeignetem Kunststoff im Spritzguß herstellbar und kann automatisch mit einem oder mehreren Reinigungselementen bestückt werden.

Praktisch kann das Ergänzungsteil auch ein Verschluß-Wandteil für eine Einsetzöffnung an der Vorderwand der Kassette sein, wobei die Einsetzöffnung insbesondere in der Nähe der Kopfeintrittsöffnung liegt. Damit ist die Erfindung nicht auf die Ausbildung eines vollständigen Frontteils beschränkt. Die Verschluß-Wandteile lassen sich zweckmäßig auch einfach auswechseln, da sie einen nur geringen Wert darstellen.

Als Variation kann das Verschlußteil auch mit dem separaten Frontteil kombiniert werden.

Das Verschluß-Wandteil weist normalerweise Befestigungselemente für die Boden- und Deckelteile der Kassette auf; wenn es für das separate Frontteil bestimmt ist, sind Befestiungselemente für das Frontteil vorgesehen.

Es ist vorteilhaft, wenn das Ergänzungsteil Befestigungselemente aufweist, die zumindest überwiegend mit den Wänden der Boden- und Deckelteile der Kassette zusammenwirken.

Das gilt besonders für Kassetten des Standes der Technik, worin die Boden- und Deckelwände als im wesentlichen flache Platten im Spritzguß hergestellt sind.

Die Befestigungselemente bestehen zweckmäßig aus Vorsprüngen, die zum Eingreifen in Nuten in Boden- und Deckelwänden bestimmt sind.

Zweckmäßig kann das Reinigungselement aus einer etwa streifenförmigen Reinigungsauflage bestehen, die am Ergänzungsteil befestigt ist.

Damit ergibt sich im einfachsten Fall eine kissenförmige Reinigungsauflage, die am Band anliegt oder gegen die das Band zeitweise angedrückt wird.

Es ist jedoch auch möglich, einen dem Aufzeichnungsträger zugewandten, mindestens einmal gewölbten Körper für eine streifenförmige Reinigungsauflage am Ergänzungskörper vorzusehen.

Vorteilhaft sind zumindest die Endkanten der streifenförmigen Reinigungsauflage(n) mit Abdeckungsteilen versehen, wodurch das Auftreten und der Weitertransport von Faserpartikeln vermeidbar wird. Dieser Zweck läßt sich noch vervollkommenen, wenn außer den seitlichen Abdeckungsteilen am Ergänzungsteil letzteres so angebracht ist, daß die Wände der Boden- und Deckelteile des Gehäuses als obere und unter Abdeckungsteile für die noch freien Streifenkanten ausgebildet sind. Die oberen und unteren Abdeckungsteile können auch am Ergänzungsteil selbst vorgesehen sein.

Die Reinigungsauflage besteht zweckmäßig aus einem Filz-, Vlies- oder Velourmaterial, wodurch der Aufzeichnungsträger schonend gereinigt werden kann.

Ein Bandumschlingungswinkel von eta 2° bis etwa 10°, insbesondere von etwa 4° bis etwa 6° kann vorgesehen sein, um das Band konstant im Kontakt mit dem jeweiligen Reinigungselement zu halten.

Zur Lösung der Aufgabe dienen auch die Ergänzungsteile allein, die als separates Frontteil, als Verschluß-Wandteil oder miteinander kombiniert ausgebildet sind und die im übrigen die praktischen Ausgestaltungen der oben zur Kassette beschriebenen Ausführungsbeispiele aufweisen können.

Ein besonders gestaltetes Frontteil ist noch durch gewölbte Reinigungskörper mit im wesentlichen senkrecht zur Bandlaufrichtung angeordneten Schlitzen oder Nuten gekennzeichnet, das vorzugsweise aus mit senkrecht angeordneten Kohlefasern gefülltem Kunststoff besteht.

Ausführungsbeispiele der Erfindungen sind in der Zeichnung dargestellt und nachfolgend beschrieben.

Es ist dargestellt in:
- Figuren 1A - 1B: eine DCC-Kassette nach der Erfindung
- Figur 2: eine erste Ausführung eines Reinigungselementes nach der Erfindung
- Figuren 3A - 3C: eine Variante eines Reinigungselementes nach der Erfindung sowie seine Lage in der Kassette
- Figur 4: ein Gehäuse einer DCC-Kassette mit separatem Frontteil mit Reinigungselementen
- Figuren 5A - 5C: 3 Varianten von Frontteilen mit Reinigungselementen
- Figuren 6 und 6A: eine schematische Draufsicht auf eine bekannte DCC-Kassette mit zwei unterschiedlichen Reinigungselementen nach dem Stand der Technik

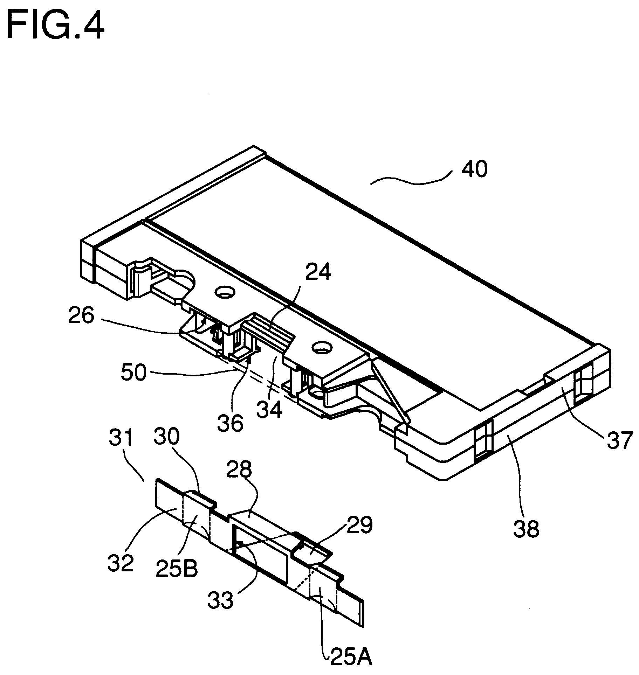

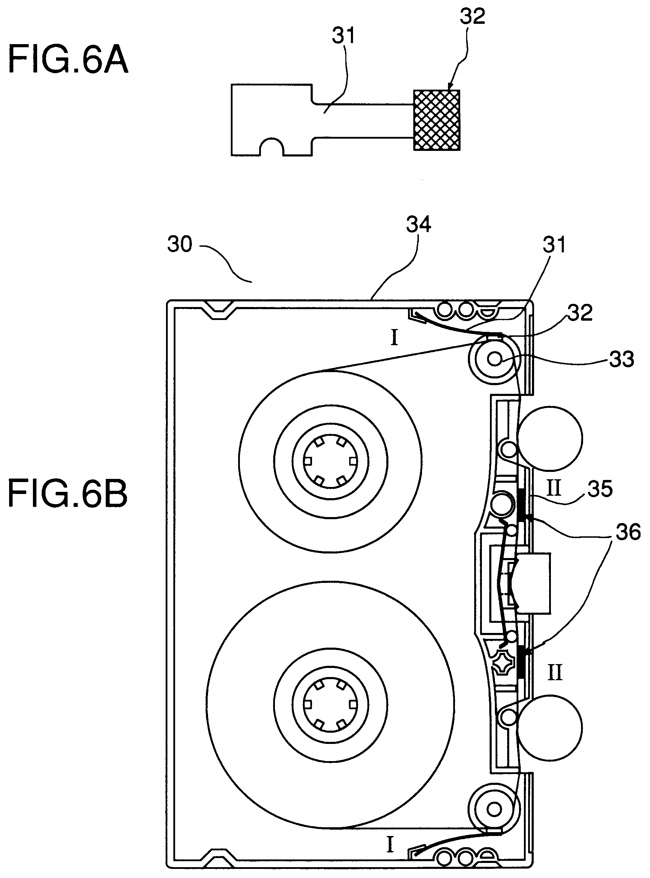

In Figuren 6 und 6A ist eine DCC-Kassette mit zwei verschiedenen Reinigungssystemen I und II nach dem Stand der Technik dargestellt. Figur 4 zeigt eine schematische Draufsicht auf die Kassette in Betriebslage auf dem Gerät mit abgenommenem Deckelteil.

Im Fall I drücken Blattfedern 31 mit einem Andruckkissen 32 das Band 3 an jeder der Umlenkrollen 33 an. Dies hat die einleitend erwähnten Nachteile beim Einspulen des Bandes 3 in die vormontierte, aber leere Kassette 30; zusätzliche Nachteile sind die notwendigen Befestigungsstege an den Seitenwänden 34 des Gehäuses sowie das zusätzliche Herstellen der Andruckfedern 31 und Kissen 32. Mit II ist ein weiteres Reinigungssystem bezeichnet, wobei an der Innenseite der Vorderwand 35 angeklebte, rechteckige Filzflecken 36 vorgesehen sind, die in ständigem Kontakt mit der Schichtseite des Magnetbandes 3 stehen sollen. Nachteilig sind die einleitend erwähnten Schwierigkeiten, die Filzflecken ohne Band- und/oder Vorspannbeschädigung, z.B. durch Klebmittel, zu befestigen. Der Kopf 40 ist in Betriebslage am Band 3 dargestellt.

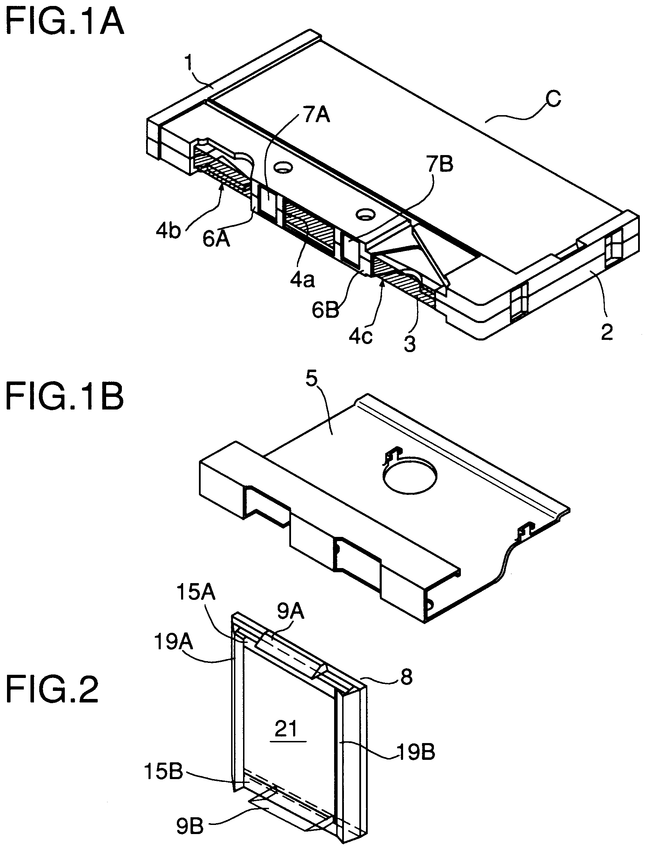

Figuren 1A und 1B zeigen eine erfindungsgemäße DCC-Kassette C bestehend aus einem thermoplastischen Gehäuse, gebildet aus Boden- und Deckelteilen 2 und 1, das den bandförmigen Aufzeichnungsträger 3, hier ein Magnetband, umschließt und an den Frontöffnungen 4a-c zum Eingriff mit nicht dargestellten Geräteelementen hält und freigibt.

Um den Aufzeichnungsträger 3 vor Staubanfall und Beschädigung zu schützen, sind die Öffnungen 4a-c, 4a Kopfeintrittsöffnung und 4b, 4c Frontöffnungen, und die nicht dargestellten Antriebsöffnungen im Bodenteil 2 durch ein Verschlußteil 5, das aus einem dünnen, gestanzten und gebogenen, rostfreien Metallblech oder aus dünnem, spritzgegossenem Kunststoffmaterial besteht, abgedeckt. Zur besseren Übersicht ist das Verschlußteil 5 in Fig. 1B in seiner Position vor der montagemäßigen Verbindung mit der in Fig. 1A dargestellten Kassette C gezeigt.

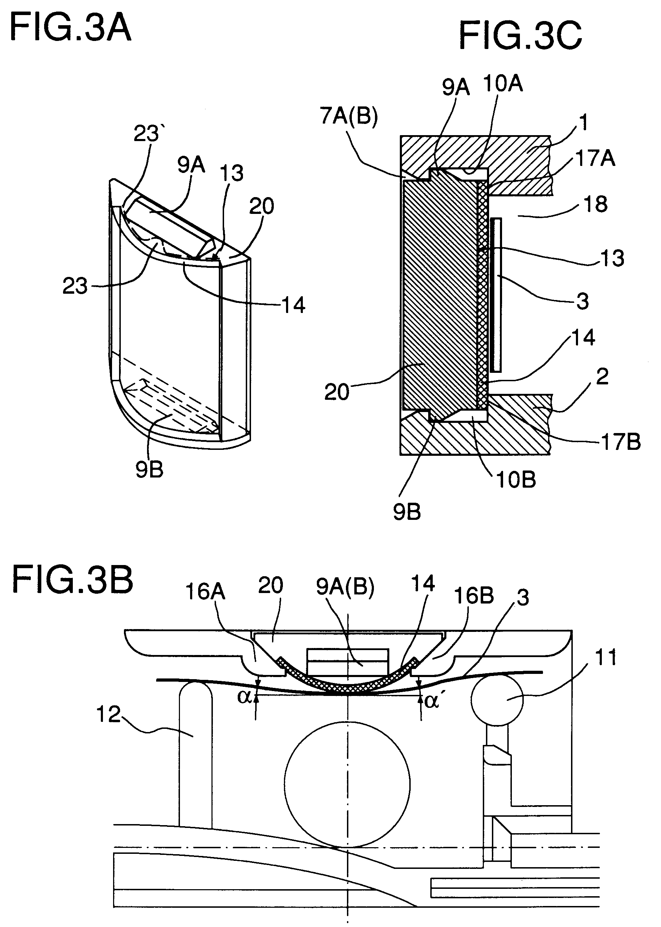

In den Vorderwandbereichen 6a-6b der Kassette C, die zwischen der Kopfeintrittsöffnung 4a und den Frontöffnungen 4b und 4c liegen, befinden sich Einsetz-Öffnungen oder -Ausschnitte 7a und 7b, in denen je ein Ergänzungsteil, das als Verschluß-Wandteil 8 ausgebildet ist, befestigbar ist. In Figur 2 ist ein erstes Verschluß-Wandteil 8 in flacher Form dargestellt. Eine Streifen-Reinigungsauflage 21 ist auf der Fläche des Wandteils 8 befestigt und die Enden der Streifenauflage sind dabei unter Seiten-Abdeckteilen 19A und 19B und gegebenenfalls auch oberen und unteren Abdeckteilen 15A und 15B untergebracht, um lose Faserpartikel zu vermeiden. An den oberen und unteren Kanten des Wandteils 8 sind Befestigungsrippen 9A und 9B angebracht, die mit entsprechenden, in Figur 3C sichtbaren, Nuten 10A und 10B in Eingriffsverbindung, z.B. eine Clips-Verbindung, kommen können. Die Dicke der Reinigungsauflage 21 muß groß genug sein, um ständig am Band 3 anzuliegen.

Der flache Basiskörper oder der Wölbungskörper der Verschluß-Wandteile 8, 8' und 20, 20' lassen sich außer aus Kunststoff auch aus rostfreiem Metallblech herstellen, so daß die Abdeckteile 19A und B mit scharfen senkrechten Reinigungskanten ausführbar sind.

Figur 3A zeigt eine weitere Ausführung eines Verschluß-Wandteils 20, wiederum mit einer Reinigungsauflage 14, die auf der Fläche 13 eines, z.B. parabelförmig geformten, Körpers 23 befestigt, das heißt geklebt oder geschweißt ist, s. die Schicht 15 in Figur 3C. Obere und untere Befestigungsrippen 9A und 9B sind ebenfalls vorhanden. Wie mit 23 gestrichelt angedeutet, könnte auch eine mehrfache Wölbung des Körpers 23 vorhanden sein.

Damit von den Schnittkanten der Reinigungsauflage 14 keine Faserpartikel auf das Band gelangen können, ist der Einsetz-Ausschnitt 7A bzw. 7B für das Verschluß-Wandteil 20 hier so gestaltet, daß seitliche Abdeck-Wandteile 16A und B und dem Wölbungskörper 23 angepaßte Wandhinterschneidungen 17A und 17B die Schnittkanten der Streifen-Reinigungsauflage 14 ringsherum, also völlig vom Raum 18, in dem das Band 3 verläuft, abtrennen. Der Bandverlauf über die Führungszapfen 11 ist in Figur 3B sichtbar. Der Bandumschlingungswinkel soll zwischen α etwa 2° und etwa 10°, vorzugsweise zwischen α etwa 4° und etwa 6° liegen, damit ausreichend Kontakt zwischen Reinigungsauflage 14 und Band 3 sichergestellt ist.

Figur 4 zeigt eine weitere erfindungsgemäße Kassette 40 mit einem davon getrennten Frontteil 41, z.B. aus leicht spritzbarem Kunststoff-Material.

Gegenüber der Kassette C in Figur 3 sind die Vorderwandteile 6A und 6B fortgelassen worden, wodurch in diesem Bereich Raum für das separate Frontteil 41 geschaffen ist. Die Spritzbedingungen für die Gehäusehälften, Boden- und Deckelteile 38 und 37, sind deshalb ohne Rücksicht auf die Vorderwände der Kassette 40 optimierbar.

Die Boden- und Deckelteile 38 und 37 weisen Rastnuten 24 und 26 am Deckelteil 37 sowie eine Rastnut am Bodenteil 38 auf, wobei die Rastnuten 24 und die Rastnut am Bodenteil 38 außen liegen und die Rastnuten 26 innen liegen. Der Querschnitt der Rastnuten 24, 26 ist beliebig, es muß nur ein geeignetes Verrasten oder Verhaken zwischen den Rastnuten und den noch zu beschreibenden steg- oder hakenartigen Vorsprüngen montagemäßig und danach gewährleistet sein.

Die Vorsprünge 28 und 29 sind dabei in der Mitte des Frontteils 41 vorgesehen und die Vorsprünge 30 sind oben und rechts und links der Mitte angeordnet.

Das Frontteil 41 selbst besteht aus einer langgestreckten Wand 32 mit einer rechteckigen Kopfeintrittsöffnung 33 in der Mitte.

Die Vorsprünge 28 - 30 sind etwa rechtwinklig an den Ober- und Unterkanten der Wand 32, die etwa die Höhe der Frontöffnung 34 der Kassette 40 besitzt, angebracht. Dabei hat der obere mittlere Vorsprung 28 einen kurzen Abstand von der Wand 32 mit nach unten gerichtetem Rast- oder Hakenfortsatz. Der untere mittlere Vorsprung 29 ist länger ausgebildet, reicht im Kassettengehäuse unter die von oben in die Gehäuseöffnung 34 ragende Andruckeinrichtung. Der Vorsprung 29 ist dabei als Ergänzungsteil der Bodenwand, genauer der Aussparung 36, ausgebildet.

Die Vorsprünge 30 greifen in die ihnen zugeordneten, inneren Rast- oder Hakennuten 26 ein, so daß eine sichere, zur Mitte symmetrische Befestigung des Frontteils 31 sichergestellt ist. In allen Fällen sind es die flachen Wände der Deckel- oder Bodenteile 37 bzw. 38, mit denen die Vorsprünge 28 - 30 in Eingriff kommen. Wenn das Frontteil 31 in seiner Sollage befestigt ist, sind dieselben Frontöffnungen 4a-4c vorhanden wie bei der Kassette C in Figur 1.

In Figur 4 ist unterhalb der Vorsprünge 30 je ein Reinigungselement 25A und 25B vorgesehen, das etwa wie das in Figur 3A dargestellte ausgebildet sein kann.

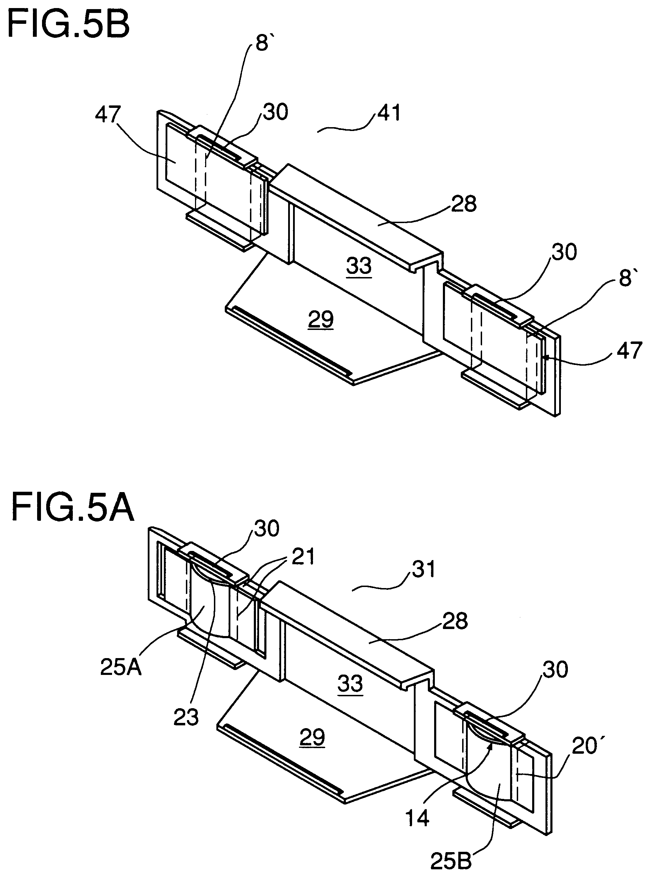

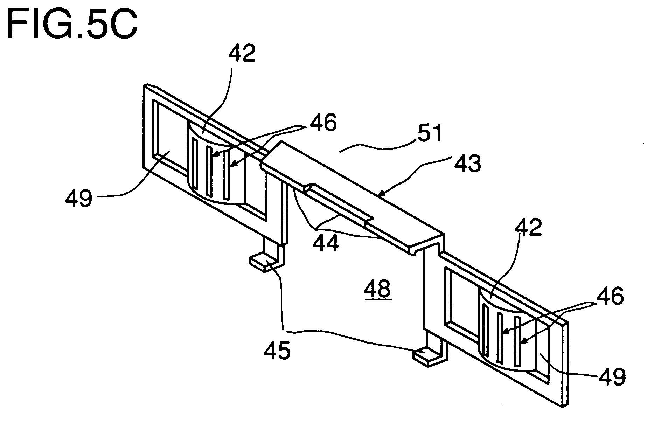

Nähere Ausführungen dazu sind aus Figur 5A und 5B zu entnehmen, da dort die Innenseiten des Frontteils 31 und eines Frontteils 41 direkt gezeigt sind.

Am Frontteil 31 sind rechts und links der Öffnung 33 unterhalb der Vorsprünge 30 Wölbungskörper 23 vorgesehen, die auch wie in Figur 3A ausgebildet sein können, es sind nur keine Abdeck-Wandteile dargestellt, die jedoch auch wie in Figur 3B bei Herstellung mit angeformt sein können (16A u. B). Die Reinigungsauflage ist mit 14 bezeichnet. Es ist vorteilhaft, wenn beidseitig der Öffnung 33 gleiche Reinigungselemente 25A und 25B auch mit demselben Bandumschlingungswinkel α (Bereich siehe oben) vorgesehen sind. Die Körper 23 können bei Herstellung des Frontteils 31 wie auch beim Verschluß-Wandteil 20 (Fig. 3A) mit angespritzt sein. Es ist jedoch auch möglich, wie Fig. 5A mit gestrichelten Linien 20' zeigt, Verschlußkörper 20 selbst zu verwenden und in nicht dargestellte Einsatz-Öffnungen im Frontteil 31 einzusetzen. Das hat bei entsprechender lösbarer Ausbildung der Befestigungsvorsprünge 28 bis 30 den Vorteil des Auswechselns der ganzen Teile 20. In Figur 5B ist ein Frontteil 41 mit Streifen-Reinigungsauflagen 47 dargestellt. Diese Reinigungselemente können auch durch die flachen Verschluß-Wandteile 8 aus Figur 2 ersetzt werden, wenn dieselben in nicht dargestellte Einsetz-Ausschnitte eingesetzt werden, wie mit gestrichelten Linien 8' schematisch angedeutet. In praktischer Ausbildung sind die Befestigungsvorsprünge der Verschluß-Wandteile 20' und 8' und -vertiefungen an den Frontteilen 30 und 31 geeignet auszubilden und vorzusehen.

In modifizierter Ausbildung (51) des Frontteils 31 und 41 kann bei entsprechender Ausbildung des Gehäuses der Kassette 40, ohne Ausschnitt 36 der Bodenwand - vgl. Strichlinien 50 in Figur 4, das Ergänzungsteil mit Vorsprung 29 fortgelassen werden, so daß ein Ausschnitt 48 (Figur 5C) entsteht. Das Frontteil 51 weist als Reinigungselemente Reinigungskörper 42 auf, die gewölbt sein können und die Schlitze oder Nuten 46 an der Bandlaufseite aufweisen können. Es sind z.B. 3 im wesentlichen parallele Schlitze oder nicht durchgehende Nuten 46 vorgesehen, die auf die ihnen zugeordnete Bandoberfläche eine Kantenreinigungswirkung ausüben sollen. Die Schlitze sind zweckmäßig im wesentlichen senkrecht zur Laufrichtung des Bandes 3 angeordnet. Wird das Frontteil 51 aus mit ebenfalls senkrechten zur Laufrichtung angeordneten Kohlenstofffasern der Durchmesser von etwa 10 µm bis etwa 15 µm gefülltem Kunststoff, z.B. einem Polyacetal, insbesondere einem Polyoxymethylen hergestellt, so ergeben sich an den wirksamen Nutkanten besonders reinigungsgeeignete scharfe Kantenausbildungen. Ansonsten kann das Frontteil 51 wie auch alle anderen Ausführungen (Frontteile 31 und 41 und Verschluß-Wandteile 8, 20 und 8', 20') aus hochwertigem spritzbaren Kunststoffmaterial, z.B. mit Gleitsubstanz und/oder Antistatika gefüllt, verwendet werden. Alle Ergänzungsteile lassen sich auch aus dem Kohlefaser-Polyacetal günstig herstellen.

Im Unterschied zu Frontteilen 31 und 41 sind am Frontteil 51 am Steg 43 des Ausschnitts 48 Befestigungsrippen 44 vorgesehen und rechts und links vom Ausschnitt 48 Befestigungshaken 45, die in nicht extra dargestellten Nuten in den Boden- und Deckelwänden, vorzugsweise lösbar, befestigbar sein sollen. Als 49 sind Rechteckvertiefungen im Bereich der Reinigungskörper 42 bezeichnet.

Als Andruck- und Reinigungsauflagen sind Filz-, Vlies oder Velour-Materialien am besten verwendbar. Fasern sind solche Kunst- oder Naturfasern, die sich zu solchen Materialien verarbeiten lassen und handelsüblich sind. Besonders wichtig ist es dabei im Fall von Magnetbändern als Aufzeichnungsträger, daß möglichst langfaserige Materialien miteinander verbunden sind und die Gefahr, daß Faserteilchen bei Herstellung und/oder Betrieb dieser Materialien auftreten, so klein wie möglich ist.

Spezielle Angaben zu geeigneten Velour, auf Basis Gewirk-, Gewebe-Teilen, oder Vliesen, die geeignet sind, sind im folgenden enthalten.

Ein aus den Gewirk- oder Gewebe-Teilen und eventuell einem Aufrauhungsteil bestehende Andruck- oder Reinigungsauflage wird als Gewirk in einem Wirkvorgang oder als Gewebe in einem Webvorgang hergestellt. Anschließend wird die Oberfläche z.B. mit Kurznadel-Bürsten so aufgerauht, daß die Wirk- oder Webverbindungen teilweise zerstört oder aufgebrochen werden und Faserenden teilweise herausstehen. Durch Abscheren der Faserenden wird eine flauschige, wildlederartige Oberfläche erhalten, die als Berührungsfläche für Bandrück- und Vorderseite und Kopfspiegel sehr geeignet ist. Die Dicken der Gewirk- oder Gewebe-Teile betragen dabei etwa 0,5 mm bzw. etwa 0,15 mm bis etwa 0,3 mm, vorzugsweise etwa 0,25 mm, so daß eine Gesamtdicke der Auflage etwa 0,8 mm betragen kann. Dabei wurde eine mittlere Faserstärke von etwa 10 µm bei einem Fasergewicht von 1,5 g pro 10 000 m benutzt. Generell ist eine mittlere Faserstärke von etwa 10 bis etwa 25 µm bei Fasergewichten von ca. 1,5 bis etwa 5 g/10 000 m benutzbar.

Das Flächengewicht des Gewirkes/Gewebes betrug dabei ca. 160 bis 180 g/m² (Faserstärke etwa 10 µm).

Ein Vlies als Auflage besteht z.B. aus Fasern von einer mittleren Länge von ca. 50 mm und einer Faserstärke von etwa 15 µm bei einem Flächengewicht von etwa 85 g/m² bis etwa 110 g/m² oder bis etwa 25 µm bei größeren Flächengewichten.

Das Flächengewicht der Faserschichten kann jedoch prinzipiell im Bereich zwischen etwa 30 bis etwa 300 g/m² liegen, um im technischen Sinne und mit den angegebenen Vorteilen für die vorliegende Erfindung verwendbar zu sein.

Die Dicke der Vliesauflage betrug etwa 0,15 bis etwa 0,6 mm, das gilt besonders für die Vliesschicht im aufgeklebten Zustand. Die quasi-statisch gemessenen Reibungs-Koeffizienten des Gewirkes/Gewebes und des Vlieses gegen die Bandrückseite betrugen etwa 0,35 bzw. 0,38, gemessen über einer mit dem Material 16 bzw. 17, 18 überzogene Stahltrommel mit 10 cm Durchmesser und einer 180°-Umschlingung bei Belastung mit 20 g.

Die Dicke des Vlieses kann, wenn keine als Feder dienende Filzunterlage zur Abstützung und Vergleichmäßigung der Andruckkräfte dient, im angeklebten Zustand im Bereich von ca. 0,15 bis ca. 1,0 mm liegen.

Das Vliesmaterial wird gewöhnlich aus Fasern hergestellt, die mittels Verbindungstechniken z.B. über Wasserstrahleinwirkung rein mechanisch miteinander verbunden, d.h. verhakt oder verfilzt werden.

Eine Verbindung über thermisches Schweißen ist ebenfalls denkbar.

Die Schweißpunkte sollten dabei jedoch sehr klein gewählt und nach dem Verschweißen eine etwa gleichmäßige Dicke des Vlieses sichergestellt sein. Auch chemische Faserverbindungen sind bekannt.

Bindemittel, gleich welcher Art, sollten zumindest im Bereich der das Band berührenden Auflage nicht vorhanden sein, da diese äußerst Bandlauf- und Kopffunktion-störende oder -schädigende Einflüsse bewirken können.

Die Auflagen sind auf die Unterlage mit herkömmlichen Klebemitteln, z.B. Polyurethan-, Acrylatkleber oder einem Mischkleber aus Polyurethan-Butadien-Acryl-Nitril, aufklebbar. Die Auflage kann auch z.B. mittels doppelseitigen Klebebandes oder in anderer geeigneter Weise aufgeklebt werden.

Die Fasern der Auflagen bestehen z.B. aus Polyamidfasern und Polyester/Polyamid-Mikrofasern im Faserstärken(-Durchmesser)-Bereich von etwa 1 µm bis etwa 15 µm. Selbstverständlich können alle Auflagen auch aus allen anderen geeigneten Fasern bestehen, wie z.B. Polypropylen, Polyacrylnitril, regenerierter Zellulose, Wolle, Baumwolle oder Zellulose-Triacetat.

Es ist erfindungsgemäß auch durchaus möglich, Kombinationen aus Filz-, Velour- und Vliesmaterialien als Andruck- und/oder Reinigungsmaterial zu verwenden. Gleitmittel können stellenweise auch in einer solchen Kombination verwendet werden, wenn sie die Andrucks- oder Reinigungscharakteristik nicht nachhaltig stören und den Lauf des Aufzeichnungsträgers begünstigen.

Beschriebene Reinigungselemente wurden bei DCC-Kassetten, in denen hochempfindliche Magnetbänder mit hohen Datenraten gespeichert werden, praktisch erfolgreich erprobt, sie sind jedoch mit Vorteil auch für alle anderen Kassettensysteme anwendbar.

Eine Kassette für bandförmige Aufzeichnungsträger ist in der Nähe des Bandlaufweges mit Reinigungselementen für das Band versehen, wobei am Kassettengehäuse Gehäuse-Ergänzungsteile anbringbar sind, die auf der zum Band gerichteten Seite mit wenigstens einem Reinigungselement versehen sind. Die Ergänzungsteile können als separates Frontteil unter Einbezug der Eintrittsöffnung für das Abtastorgan ausgebildet sein oder als Verschluß-Wandteile für spezielle Einsetz-Öffnungen im Gehäuse.

Verwendbar sind derartige separate Reinigungselemente für alle Arten von Film- oder Magnetbandkassetten.

## Patentansprüche

1. Kassette für einen Aufzeichnungsträger, insbesondere für ein Magnetband (3), mit einem Gehäuse aus Boden- und Deckelteilen (2, 1) und Rückwand, Vorderwand und Seitenwänden, wobei die Vorderwand eine Kopfeintrittsöffnung aufweist und an der Innenseite der Vorderwand Reinigungselemente für den Aufzeichnungsträger vorgesehen sind, dadurch gekennzeichnet, daß die Vorderwand (6A,B) mindestens ein separates, am Gehäuse befestigbares Ergänzungsteil (31, 41, 51, 8, 20) aufweist, an dessen Innenseite die Reinigungselemente (21, 14, 47, 25A u. B) vorgesehen sind.

2. Kassette nach Anspruch 1, dadurch gekennzeichnet, daß das Ergänzungsteil ein die Vorderwand im Bereich der Kopfeintrittsöffnung (33) bildendes separates Frontteil (31, 41, 51) ist, das die Kopfeintrittsöffnung (33 bzw. 48) selbst umfaßt.

3. Kassette nach Anspruch 1, dadurch gekennzeichnet, daß das Ergänzungsteil ein Verschluß-Wandteil (8, 20) für eine Einsetz-Öffnung (7A u. B) an der Vorderseitenwand (6A u. B) der Kassette (C) ist, wobei die Einsetzöffnung (7A u. B) insbesondere in der Nähe der Kopfeintrittsöffnung (4a) liegt.

4. Kassette nach Anspruch 2 und 3, dadurch gekennzeichnet, daß das Verschluß-Wandteil (8', 20') für eine Einsetzöffnung eines Frontteils (31, 41) bestimmt ist, und Befestigungselemente (9A u. B) am Verschluß-Wandteil (8', 20') mit Befestigungsmitteln am Frontteil (31, 41) zusammenwirken.

5. Kassette nach einem der Ansprüche 1 bis 3, dadurch gekennzeichnet, daß das Ergänzungsteil (31, 41, 51) Befestigungselemente (28-30, 44, 45) aufweist, die zumindest überwiegend mit den Wänden der Boden- und Deckelteile (38, 37) der Kassette (40) zusammenwirken.

6. Kassette nach Anspruch 1 und einem oder mehreren der Ansprüche 2 bis 3 und 5, dadurch gekennzeichnet, daß die Ergänzungsteil-Befestigungselemente aus Vorsprüngen (28-30, 44, 45) bestehen und die Wände der Boden- und Deckelteile entsprechend geformte Befestigungsnuten (24, 26) aufweisen.

7. Kassette nach Anspruch 1 und einem oder mehreren der Ansprüche 2 bis 6, dadurch gekennzeichnet, daß das Reinigungselement aus einer etwa streifenförmigen Reinigungsauflage (21, 14, 47) besteht, die am Ergänzungsteil (8, 20, 31, 41) befestigt ist.

8. Kassette nach Anspruch 1 und einem oder mehreren der Ansprüche 2 bis 7, dadurch gekennzeichnet, daß das Ergänzungsteil (20) einen dem Aufzeichnungsträger (3) zugewandten, mindestens einmal gewölbten Körper (23) für eine streifenförmige Reinigungsauflage (21, 14) als Reinigungselement aufweist.

9. Kassette nach Anspruch 1 und 8 und einem oder mehreren der Ansprüche 2 bis 7, dadurch gekennzeichnet, daß zumindest die Endkanten der streifenförmigen Reinigungsauflage(n) (20, 14, 47) mit Abdeckungsteilen (19A u. B, 16A u. B, 17A u. B) versehen sind.

10. Kassette nach Anspruch 9, dadurch gekennzeichnet, daß seitliche Abdeckungsteile (16A u. B) vorgesehen sind und daß die oberen und unteren Abdeckungsteile (17A u. B) an den Wänden der Boden- und Deckelteile (2, 1) ausgebildet sind.

11. Kassette nach Anspruch 10, dadurch gekennzeichnet, daß die seitlichen (19A u. B) und die oberen und unteren Abdeckungsteile (15A u. B) am Ergänzungsteil (8) ausgebildet sind.

12. Kassette nach Anspruch 1 und einem oder mehreren der Ansprüche 2 bis 11, dadurch gekennzeichnet, daß die Reinigungsauflage(n) (14, 21, 47) aus einem Filz-, Vlies- oder Velourmaterial besteht (bestehen).

13. Kassette nach Anspruch 1 und 8 und einem oder mehreren der Ansprüche 2 bis 7 und 9 bis 12, dadurch gekennzeichnet, daß der Bandumschlingungswinkel am Reinigungselement (20, 25A u. B, 42) zwischen etwa 2° bis etwa 10°, insbesondere zwischen etwa 4° bis etwa 6° liegt.

14. Ergänzungsteil für eine Kassette für Aufzeichnungsträger nach Anspruch 1, dadurch gekennzeichnet, daß es ein die Vorderwand im Bereich der Kopfeintrittsöffnung (33) bildendes Frontteil (31, 41, 51) ist, an dessen Innenseiten die Reinigungselemente (25A u. B, 47, 42) vorgesehen sind.

15. Ergänzungsteil für eine Kassette nach Anspruch 1 und 3 oder 11, dadurch gekennzeichnet, daß es als Verschluß-Wandteil (8, 20, 8', 20') für eine Einsetz-Öffnung (7A,B) an der Vorderwand (6A,B) der Kassette (C), insbesondere im separaten Frontteil (31, 41), ausgebildet ist.

16. Ergänzungsteil nach Anspruch 14 und 15, gekennzeichnet durch als Vorsprünge (28-30) ausgebildete Befestigungselemente und eine streifenförmige Reinigungsauflage (14, 21, 47).

17. Ergänzungsteil nach einem oder mehreren der Ansprüche 14 bis 16, dadurch gekennzeichnet, daß die Reinigungselemente aus an der Innenseite befindlichen gewölbten Körpern (23) mit einer gewölbten Aufnahmefläche für eine streifenförmige Reinigungsauflage (14) bestehen.

18. Ergänzungsteil nach Anspruch 16 oder 17, gekennzeichnet durch Abdeckungsteile (19A u. B, 15A u. B) zumindest für die Endkanten der streifenförmigen Reinigungsauflage (14, 21).

19. Ergänzungsteil nach Anspruch 17, gekennzeichnet durch einen gewölbten Körper (23, 42) für einen Bandumschlingungswinkel (α) von etwa 2° bis etwa 10°, insbesondere von etwa 4° bis etwa 6°.

20. Ergänzungsteil nach Anspruch 14 und einem oder mehreren der Absprüche 15 bis 19, dadurch gekennzeichnet, daß das Frontteil (51) mit gewölbten Reinigungskörpern (42) mit im wesentlichen senkrecht angeordneten Schlitzen oder Nuten (46) ausgebildet ist.

21. Ergänzungsteil nach Anspruch 14 oder 20, dadurch gekennzeichnet, daß das Frontteil (31, 41, 51) mit einem Ausschnitt (48) als Kopfeintrittsöffnung (4a) ausgebildet ist.

22. Ergänzungsteil nach Anspruch 14 oder 20 und einem oder mehreren der Ansprüche 15 bis 19 und 21, dadurch gekennzeichnet, daß die Verschluß-Wandteile (8, 20, 8', 20') und Frontteile (31, 41, 51) aus einem mit Kohlefasern gefüllten Kunststoff, insbesondere einem Polyacetal, bestehen.
